(19) Europäisches Patentamt
European Patent Office
Office européen des brevets

(11) Veröffentlichungsnummer : **0 290 391 B1**

(12) # EUROPÄISCHE PATENTSCHRIFT

(45) Veröffentlichungstag der Patentschrift : **10.06.92 Patentblatt 92/24**

(21) Anmeldenummer : **88810273.8**

(22) Anmeldetag : **27.04.88**

(51) Int. Cl.5 : **C08L 23/02,** C08K 5/00, C08K 5/34, C08K 5/09, C08K 5/06

(54) **Gegen Lichtschädigung stabilisierte Polyolefine.**

Die Akte enthält technische Angaben, die nach dem Eingang der Anmeldung eingereicht wurden und die nicht in dieserPatentschrift enthalten sind.

(30) Priorität : **05.05.87 CH 1708/87**

(43) Veröffentlichungstag der Anmeldung : **09.11.88 Patentblatt 88/45**

(45) Bekanntmachung des Hinweises auf die Patenterteilung : **10.06.92 Patentblatt 92/24**

(84) Benannte Vertragsstaaten : **DE FR GB IT**

(56) Entgegenhaltungen :
**US-A- 4 256 627**
**US-A- 4 426 472**

(73) Patentinhaber : **CIBA-GEIGY AG**
**Klybeckstrasse 141**
**CH-4002 Basel (CH)**

(72) Erfinder : **Gugumus, François, Dr.**
**Ochsenstr. 20**
**CH-4123 Allschwil (CH)**

EP 0 290 391 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Stabilisierung von Polyolefinen gegen Lichtschädigung durch Zusatz eines synergistischen Gemisches von Stabilisatoren und Costabilisatoren. Primärer Stabilisator ist dabei ein Polyalkylpiperidin, Costabilisator ist ein organisches Zink-oder Magnesiumsalz. Ferner enthält das Gemisch noch einen UV-Absorber und/oder ein Pigment.

Polyalkylpiperidine sind bekannt als ausgezeichnete Lichtschutzmittel für organische Materialien, insbesondere für Polyolefine. Es ist auch allgemein bekannt, Metallsalze von Fettsäuren, wie z.B. Calciumstearat, als Verarbeitungshilfsmittel in Polyolefinen zu verwenden. In der US-A-4,202,816 werden Komplexe von Polyalkylpiperidinen mit Metallverbindungen aufgezeigt, die wirkungsvoller als das jeweilige Polyalkylpiperidin allein sind. Beispiele für Metallverbindungen in diesen Komplexen sind Nickel-, Kobalt-, Magnesium- oder Mangan-acetylacetonat oder -benzoylacetonat, Nickel-laurat und -önanthat, Zink-laurat und Zinkacetat. Analoge Metallkomplexe mit polymeren Polyalkylpiperidinen sind in der US-A-4 256 627 beschrieben, wobei als Metallverbindung z.B. Nickel-acetat, -önanthat und -laurat, Nickel- und Kobalt-acetylacetonat und Zink-önanthat aufgeführt sind.

Es ist auch bekannt, dass man Polyalkylpiperidin-Lichtschutzmittel mit UV-Absorbern kombinieren kann. Solche Kombinationen sind beschrieben, z.B. in Styrolpolymeren (US 4,110,304), in Lackharzen (US 4,426,472) oder in unpigmentiertem Polypropylen (Gächter, Müller, Taschenbuch der Kunstoff-Additive, 2. Ausgabe 1983, Seite 161/162, Carl Hanser-Verlag).

Es ist weiter allgemein bekannt, dass pigmentierte Polymere weniger anfällig für Lichtschädigung sind als unpigmentierte. In Gächter, Müller (1.c.), Seite 162, wird gezeigt, dass sich die Lichtbeständigkeit von mit Polyalkylpiperidinen stabilisiertem Polypropylen durch Pigmentierung mit 0,5% verschiedener Pigmente erheblich steigern lässt.

Es wurde nunmehr gefunden, dass sich über die bekannten Effekte hinaus eine weitere Wirkungssteigerung erzielen lässt, wenn man dem Polyolefin ausser einem Polyalkylpiperidin-Lichtschutzmittel ein organisches Zink- oder Magnesiumsalz und einen UV-Absorber und/oder ein Pigment zusetzt.

Die Erfindung betrifft daher ein gegen Lichtschädigung stabilisiertes Polyolefin, enthaltend

A) mindestens ein Polyalkylpiperidin-Lichtschutzmittel,

B) ein organisches Zink- oder Magnesiumsalz und

C) entweder

$C_1$) einen UV-Absorber oder

$C_2$) ein Pigment oder

$C_3$) einen UV-Absorber und ein Pigment.

Unter Polyolefinen sind alle Homo- und Copolymerisate von $\alpha$-Olefinen zu verstehen, wie z.B. Polyethylen, Polypropylen, Polyisobutylen, Polybuten-1, Polymethylpenten-1, Ethylen-Propylen-Copolymer (CP), Propylen-Buten-1-CP, Propylen-Isobutylen-CP, Ethylen-Buten-1-CP, Ethylen-Alkylacrylat-CP, Ethylen-Vinylacetat-CP, Ethylen-Acrylsäure-CP oder Ethylen-Propylen-Dien-Terpolymere, sowie Mischungen (Polyblends) solcher Olefinpolymeren untereinander oder mit anderen Polymeren.

Von besonderer Bedeutung ist die erfindungsgemässe Stabilisierung von Polypropylen.

Die erfindungsgemäss einsetzbaren Polyalkylpiperidin-Lichtschutzmittel können niedermolekular (MG < 700) oder höhermolekular (Oligomere, Polymere) sein. Sie besitzen die charakteristische Gruppe I

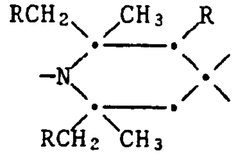

(I)

worin R Wasserstoff oder Methyl bedeutet. Diese Gruppe kann im Molekül einmal oder mehrmals vorhanden sein. Bevorzugt sind Piperidinderivate mit der Gruppe I, worin R Wasserstoff ist. Es handelt sich dabei um Derivate des 2,2,6,6-Tetramethylpiperidins. Bevorzugt tragen diese Polyalkylpiperidine einen oder zwei polare Substituenten in 4-Stellung oder ein polares Spiro-Ringsystem ist an die 4-Stellung gebunden. Von Bedeutung als Lichtschutzmittel sind insbesondere die folgenden Klassen Polyalkylpiperidinen.

a) Verbindungen der Formel II

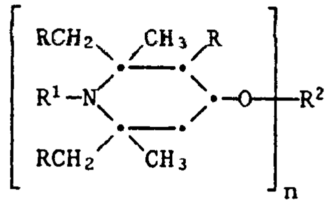

(II),

worin n eine Zahl von 1 bis 4, vorzugsweise 1 oder 2 bedeutet, R Wasserstoff oder Methyl bedeutet, $R^1$ Wasserstoff, Oxyl, $C_1$-$C_{12}$-Alkyl, $C_3$-$C_8$ Alkenyl, $C_3$-$C_8$ Alkinyl, $C_7$-$C_{12}$ Aralkyl, $C_1$-$C_8$ Alkanoyl, $C_3$-$C_5$ Alkenoyl, Glycidyl oder eine Gruppe -$CH_2CH(OH)$-Z, worin Z Wasserstoff, Methyl oder Phenyl ist, bedeutet, wobei $R^1$ vorzugsweise $C_1$-$C_4$ Alkyl, Allyl, Benzyl, Acetyl oder Acryloyl ist und $R^2$, wenn n 1 ist, Wasserstoff, gegebenenfalls durch ein oder mehrere Sauerstoffatome unterbrochenes $C_1$-$C_{18}$ Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wenn n 2 ist, $C_1$-$C_{12}$ Alkylen, $C_4$-$C_{12}$ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten $C_1$-$C_{12}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$ Alkyl kann $R^1$ oder $R^2$ z.B. die oben angeführten Gruppen und dazu noch beispielsweise n-Tridecyl, n-Tetradecyl, n-Hexadecyl oder n-Octadecyl darstellen.

Wenn $R^1$ $C_3$-$C_8$ Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R^1$ ist als $C_3$-$C_8$ Alkinyl bevorzugt Propargyl.

Als $C_7$-$C_{12}$ Aralkyl ist $R^1$ insbesondere Phenethyl und vor allem Benzyl.

$R^1$ ist als $C_1$-$C_8$ Alkanoyl beispielsweise Formyl, Propionyl, Butyryl, Octanoyl, aber bevorzugt Acetyl und als $C_3$-$C_5$ Alkenoyl insbesondere Acryloyl.

Bedeutet $R^2$ einen einwertigen Rest einer Carbonsäure, so stellt es beispielsweise einen Essigsäure-, Capronsäure-, Stearinsäure-, Acrylsäure-, Methacrylsäure-, Benzoe- oder $\beta$-(3,5-Di-tert.-butyl-4-hydroxy-phenyl)-propionsäurerest dar.

Bedeutet $R^2$ einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $R^2$ einen dreiwertigen Rest einer Tricarbonsäure dar, so bedeutet es z.B. einen Trimellitsäure- oder einen Nitrilotriessigsäurerest.

Stellt $R^2$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $R^2$ einen zweiwertigen Rest einer Dicarbaminsäure, so stellt es beispielsweise einen Hexamethylendicarbaminsäure- oder einen 2,4-Toluylen-dicarbaminsäurerest dar.

Beispiele für Polyalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin

6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14)Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Propargyl-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethylpiperidin-4-yl)-ester
24) Dibenzyl-malonsäure-di-(1,2,2,6,6-pentamethylpiperidin-4-yl)-ester
25) Dibenzyl-malonsäure-di-(1,2,3,6-tetramethyl-2,6-diethyl-piperidin-4-yl)ester
26) Hexan-1′,6′-bis-(4-carbamoyloxy-1-n-butyl-2,2,6,6-tetramethylpiperidin)
27) Toluol-2′,4′-bis-(4-carbamoyloxy-1-n-propyl-2,2,6,6-tetramethylpiperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

b) Verbindungen der Formel (III)

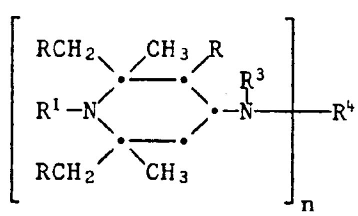
(III)

worin n die Zahl 1 oder 2 bedeutet, R und $R^1$ die unter a) angegebene Bedeutung haben, $R^3$ Wasserstoff, $C_1$-$C_{12}$ Alkyl, $C_2$-$C_5$ Hydroxyalkyl, $C_5$-$C_7$ Cycloalkyl, $C_7$-$C_8$ Aralkyl, $C_2$-$C_{18}$ Alkanoyl, $C_3$-$C_5$ Alkenoyl oder Benzoyl ist und $R^4$ wenn n 1 ist, Wasserstoff, $C_1$-$C_{18}$ Alkyl, $C_3$-$C_8$ Alkenyl, $C_5$-$C_7$ Cycloalkyl, mit einer Hydroxy-, Cyano-, Alkoxycarbonyl- oder Carbamidgruppe substituiertes $C_1$-$C_4$ Alkyl, Glycidyl, eine Gruppe der Formel $-CH_2-CH(OH)-Z$ oder der Formel -CONH-Z ist, worin Z Wasserstoff, Methyl oder Phenyl bedeutet; wenn n 2 ist, $C_2$-$C_{12}$ Alkylen, $C_6$-$C_{12}$ Arylen, Xylylen, eine $-CH_2-CH(OH)-CH_2$-Gruppe oder eine Gruppe $-CH_2-CH(OH)-CH_2-O-D-O-$ bedeutet, worin D $C_2$-$C_{10}$ Alkylen, $C_6$-$C_{15}$ Arylen, $C_6$-$C_{12}$ Cycloalkylen ist, oder vorausgesetzt, dass $R^3$ nicht Alkanoyl, Alkenoyl oder Benzoyl bedeutet, $R^4$ auch einen zweiwertigen Rest einer aliphatischen, cycloaliphatischen oder aromatischen Dicarbonsäure oder Dicarbaminsäure oder auch die Gruppe -CO- bedeuten kann, oder $R^3$ und $R^4$ zusammen, wenn n 1 ist, den zweiwertigen Rest einer aliphatischen, cycloaliphatischen oder aromatischen, 1,2- oder 1,3-Dicarbonsäure bedeuten können.

Stellen etwaige Substituenten $C_1$-$C_{12}$- oder $C_1$-$C_{18}$Alkyl dar, so haben sie die bereits unter a) angegebene Bedeutung.

Bedeuten etwaige Substituenten $C_5$-$C_7$ Cycloalkyl, so stellen sie insbesondere Cyclohexyl dar.

Als $C_7$-$C_8$ Aralkyl ist $R^3$ insbesondere Phenylethyl oder vor allem Benzyl. Als $C_2$-$C_5$Hydroxyalkyl ist $R^3$ ins-

besondere 2-Hydroxyethyl oder 2-Hydroxypropyl.

$R^3$ ist als $C_2$-$C_{18}$ Alkanoyl beispielsweise Propionyl, Butyryl, Octanoyl, Dodecanoyl, Hexadecanoyl, Octadecanoyl, aber bevorzugt Acetyl und als $C_3$-$C_5$ Alkenoyl insbesondere Acryloyl.

Bedeutet $R^4$ $C_2$-$C_8$ Alkenyl, dann handelt es sich z.B. um Allyl, Methallyl, 2-Butenyl, 2-Pentenyl, 2-Hexenyl oder 2-Octenyl.

$R^4$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$ Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4′-Diphenylen dar.

Als $C_6$-$C_{12}$ Cycloalkylen ist D insbesondere Cyclohexylen.

Beispiele für Polyalkylpiperidin-Verbindungen dieser Klasse sind folgende Verbindungen:

37) N,N′-Bis-(2,2,6,6-tetramethylpiperidin-4-yl)-hexamethylen-1,6-diamin

38) N,N′-Bis-(2,2,6,6-tetramethylpiperidin-4-yl)-hexamethylen-1,6-diacetamid

39) 1-Acetyl-4-(N-cyclohexylacetamido)-2,2,6,6-tetramethylpiperidin

40) 4-Benzoylamino-2,2,6,6-tetramethylpiperidin

41) N,N′-Bis-(2,2,6,6-tetramethylpiperidin-4-yl)-N,N′-dibutyladipamid

42) N,N′-Bis-(2,2,6,6-tetramethylpiperidin-4-yl)-N,N′-dicyclohexyl-2-hydroxypropylen-1,3-diamin

43) N,N′-Bis-(2,2,6,6-tetramethylpiperidin-4-yl)-p-xylylen-diamin

44) N,N′-Bis-(2,2,6,6-tetramethylpiperidin-4-yl)-succindiamid

45) N-(2,2,6,6-Tetramethylpiperidin-4-yl)-β-aminodipropionsäure-di-(2,2,6,6-tetramethylpiperidin-4-yl)-ester

46) Die Verbindung der Formel

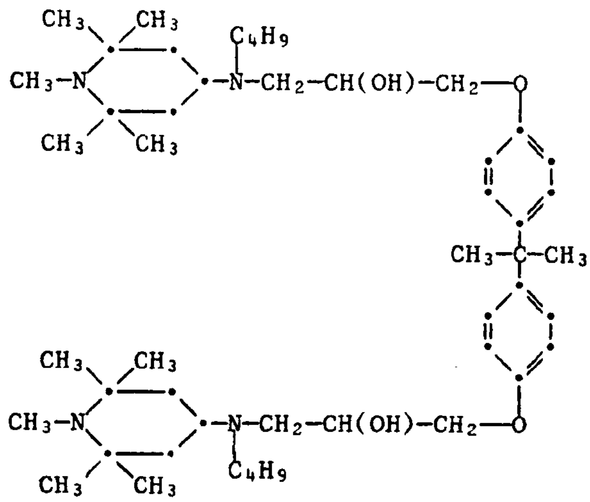

47) 4-(Bis-2-hydroxyethyl-amino)-1,2,2,6,6-pentamethylpiperidin

48) 4-(3-Methyl-4-hydroxy-5-tert.-butyl-benzoesäureamido)-2,2,6,6-tetramethylpiperidin

49) 4-Methacrylamido-1,2,2,6,6-pentamethylpiperidin

c) Verbindungen der Formel (IV)

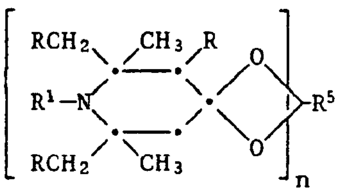

(IV)

worin n die Zahl 1 oder 2 bedeutet, R und $R^1$ unter a) angegebene Bedeutung haben und $R^5$, wenn n 1 ist, $C_2$-$C_8$ Alkylen oder Hydroxyalkylen oder $C_4$-$C_{22}$ Acyloxyalkylen, wenn n 2 ist, die Gruppe $(-CH_2)_2C(CH_2-)_2$ bedeutet.

Bedeutet $R^5$ $C_2$-$C_8$-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Als $C_4$-$C_{22}$ Acyloxyalkylen bedeutet $R^5$ z.B. 2-Ethyl-2-acetoxymethylpropylen.

Beispiele für Polyalkylpiperidin-Verbindungen dieser Klasse sind folgende Verbindungen:

50) 9-Aza-8,8,10,10-tetramethyl-1,5-dioxaspiro[5.5]undecan

51) 9-Aza-8,8,10,10-tetramethyl-3-ethyl-1,5-dioxaspiro[5.5]undecan

52) 8-Aza-2,7,7,8,9,9-hexamethyl-1,4-dioxaspiro[4.5]decan

53) 9-Aza-3-hydroxymethyl-3-ethyl-8,8,9,10,10-pentamethyl-1,5-dioxaspiro [5.5]undecan

54. 9-Aza-3-ethyl-3-acetoxymethyl-9-acetyl-8,8,10,10-tetramethyl-1,5-dioxaspiro[5.5]undecan

55) 2,2,6,6-Tetramethylpiperidin-4-spiro-2′-(1′,3′-dioxan)-5′-spiro-5″-( 1″,3″-dioxan)-2″-spiro-4‴-(2‴,2‴,6‴, 6‴-tetramethylpiperidin).

d) Verbindungen der Formeln VA, VB und VC

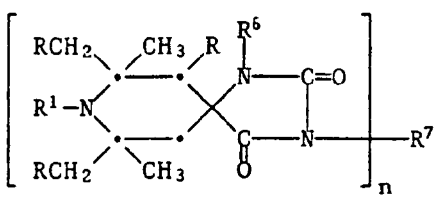

(VA)

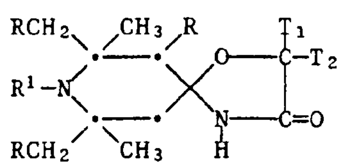

(VB)

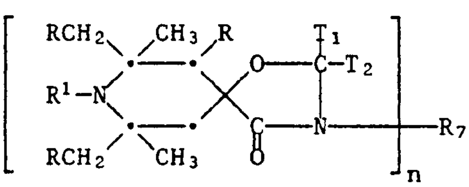

(VC)

worin n die Zahl 1 oder 2 bedeutet, R und $R^1$ die unter a) angegebene Bedeutung haben, $R^6$ Wasserstoff, $C_1$-$C_{12}$ Alkyl, Allyl, Benzyl, Glycidyl oder $C_2$-$C_6$ Alkoxyalkyl ist und $R^7$, wenn n 1 ist, Wasserstoff, $C_1$-$C_{12}$ Alkyl, $C_3$-$C_5$ Alkenyl, $C_7$-$C_9$ Aralkyl, $C_5$-$C_7$ Cycloalkyl, $C_2$-$C_4$ Hydroxyalkyl, $C_2$-$C_6$ Alkoxyalkyl, $C_6$-$C_{10}$ Aryl, Gylcidyl oder eine Gruppe der Formel $-(CH_2)_p$-COO-Q oder der Formel $-(CH_2)_p$-O-CO-Q ist, worin p 1 oder 2 und Q $C_1$-$C_4$ Alkyl oder Phenyl sind, wenn n 2 ist, $C_2$-$C_{12}$ Alkylen, $C_4$-$C_{12}$-Alkenylen, $C_6$-$C_{12}$ Arylen, eine Gruppe $-CH_2-CH(OH)-CH_2-O-D-O-CH_2-CH(OH)-CH_2-$, worin D $C_2$-$C_{10}$ Alkylen, $C_6$-$C_{15}$ Arylen, $C_6$-$C_{12}$ Cycloalkylen ist, oder eine Gruppe $-CH_2CH(OZ')CH_2-(OCH_2-CH(OZ')CH_2)_2-$ bedeutet, worin Z′ Wasserstoff, $C_1$-$C_{18}$ Alkyl, Allyl, Benzyl, $C_2$-$C_{12}$ Alkanoyl oder Benzoyl ist, $T_1$ und $T_2$ unabhängig voneinander Wasserstoff, $C_1$-$C_{18}$ Alkyl oder gegebenen-

falls durch Halogen oder $C_1$-$C_4$ Alkyl substituiertes $C_6$-$C_{10}$ Aryl oder $C_7$-$C_9$ Aralkyl bedeuten oder $T_1$ und $T_2$ zusammen mit dem sie bindenden C-Atom einen $C_5$-$C_{12}$ Cycloalkanring bilden.

Bedeuten etwaige Substituenten $C_1$-$C_{12}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$ Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$ Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt $R^7$ $C_3$-$C_5$ Alkenyl dar, so bedeutet es z.B. 1-Propenyl, Allyl, Methallyl, 2-Butenyl oder 2-Pentenyl.

Als $C_7$-$C_9$ Aralkyl sind $R^7$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $R^7$ $C_2$-$C_4$ Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$ Aryl bedeuten $R^7$, $T_1$ und $T_2$ insbesondere Phenyl, $\alpha$- oder $\beta$-Naphthyl, die gegebenenfalls mit Halogen oder $C_1$-$C_4$ Alkyl substituiert sind.

Stellt $R^7$ $C_2$-$C_{12}$ Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$-$C_{12}$ Alkenylen bedeutet $R^7$ insbesondere 2-Butenylen, 2-Pentenylen oder 3-Hexenylen.

Bedeutet $R^7$ $C_6$-$C_{12}$ Arylen, so stellt es beispielsweise o-, m- oder p-Phenylen, 1,4-Naphthylen oder 4,4'-Diphenylen dar.

Bedeutet Z' $C_2$-$C_{12}$ Alkanoyl, so stellt es beispielsweise Propionyl, Butyryl, Octanoyl, Dodecanoyl, aber bevorzugt Acetyl dar.

D hat als $C_2$-$C_{10}$ Alkylen, $C_6$-$C_{15}$ Arylen oder $C_6$-$C_{12}$ Cycloalkylen die unter b) angegebene Bedeutung.

Beispiele für Polyalkylpiperidin-Verbindungen dieser Klasse sind folgende Verbindungen:

56) 3-Benzyl-1,3,8-triaza-7,7,9,9-tetramethylspiro[4.5]decan-2,4-dion

57) 3-n-Octyl-1,3,8-triaza-7,7,9,9-tetramethylspiro[4.5]decan-2,4-dion

58) 3-Allyl-1,3,8-triaza-1,7,7,9,9-pentamethylspiro[4.5]decan-2,4-dion

59) 3-Gylcidyl-1,3,8-triaza-7,7,8,9,9-pentamethylspiro[4.5]decan-2,4-dion

60) 1,3,7,7,8,9,9-Heptamethyl-1,3,8-triazaspiro[4.5]decan-2,4-dion

61) 2-Iso-propyl-7,7,9,9-tetramethyl-1-oxa-3,8-diaza-4-oxo-spiro[4.5]decan

62) 2,2-Dibutyl-7,7,9,9-tetramethyl-1-oxa-3,8-diaza-4-oxo-spiro[4.5]decan

63) 2,2,4,4-Tetramethyl-7-oxa-3,20-diaza-21-oxo-dispiro[5.1.11.2]heneicosan

64) 2-Butyl-7,7,9,9-tetramethyl-1-oxa-4,8-diaza-3-oxo-spiro-[4,5]decan

65) 8-Acetyl-3-dodecyl-1,3,8-triaza-7,7,9,9-tetramethylspiro[4,5]decan-2,4-dion

oder die Verbindungen der folgenden Formeln:

66)

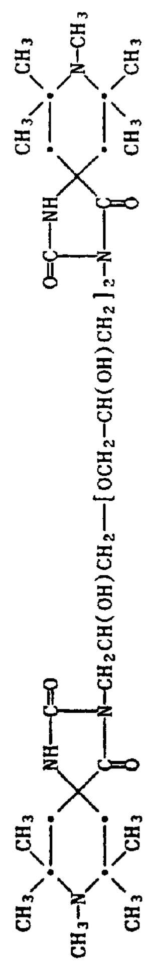

67)

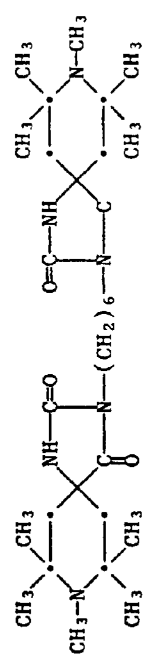

68)

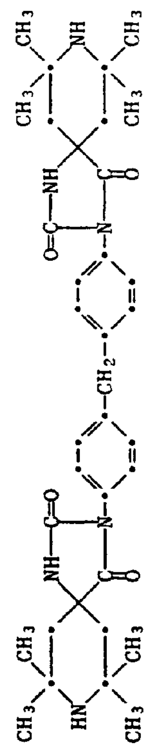

69)

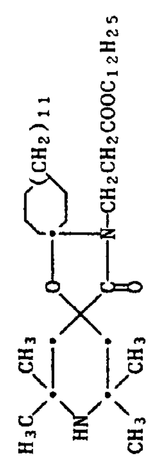

e) Verbindungen der Formel VI

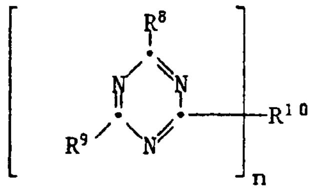 (VI),

worin n die Zahl 1 oder 2 ist und $R^8$ eine Gruppe der Formel

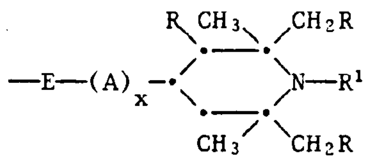

bedeutet, worin R und $R^1$ die unter a) angegebene Bedeutung haben, E -O- oder $-NR^{11}-$ ist, A $C_2$-$C_6$-Alkylen oder $-(CH_2)_3$-O- und x die Zahlen 0 oder 1 bedeuten, $R^9$ gleich $R^8$ oder eine der Gruppen $-NR^{11}R^{12}$, $-OR^{13}$, $-NHCH_2OR^{13}$ oder $-N(CH_2OR^{13})_2$ ist, $R^{10}$, wenn n = 1 ist, gleich $R^8$ oder $R^9$, und wenn n = 2 ist, eine Gruppe -E-B-E- ist, worin B gegebenenfalls durch $-N(R^{11})$- unterbrochenes $C_2$-$C_6$ Alkylen bedeutet, $R^{11}$ $C_1$-$C_{12}$ Alkyl, Cyclohexyl, Benzyl oder $C_1$-$C_4$ Hydroxyalkyl oder eine Gruppe der Formel

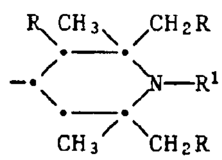

ist, $R^{12}$ $C_1$-$C_{12}$ Alkyl, Cyclohexyl, Benzyl, $C_1$-$C_4$ Hydroxyalkyl und $R^{13}$ Wasserstoff, $C_1$-$C_{12}$ Alkyl oder Phenyl bedeuten oder $R^{11}$ und $R^{12}$ zusammen $C_4$-$C_5$-Alkylen oder -Oxaalkylen, beispielsweise

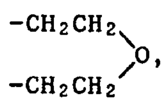

oder eine Gruppe der Formel

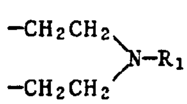

sind oder auch $R^{11}$ und $R^{12}$ jeweils eine Gruppe der Formel

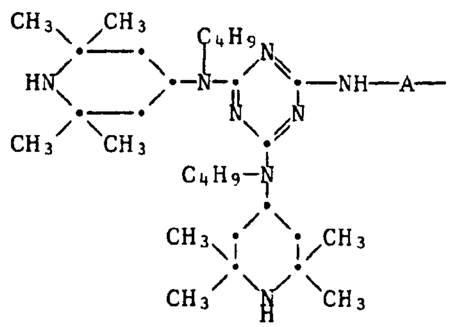

bedeuten.

Bedeuten etwaige Substituenten $C_1$-$C_{12}$ Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$ Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$ Alkylen, so stellt es beispielsweise Ethylen, Propylen, 2,2-Dimethylpropylen, Tetramethylen oder Hexamethylen dar.

Stellen $R^{11}$ und $R^{12}$ zusammen $C_4$-$C_5$ Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln:

70) 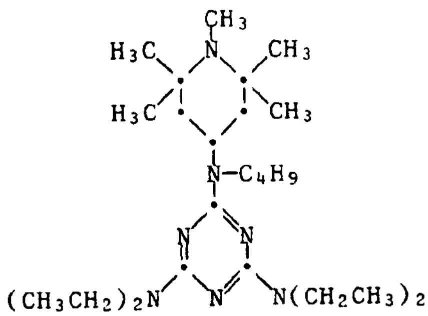

71) 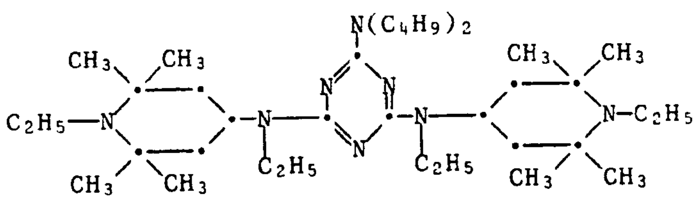

72) 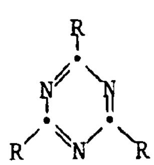 mit R = $-NH-CH_2CH_2CH_2-O-$ 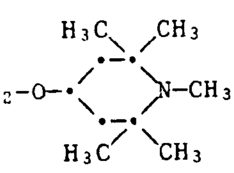

73)

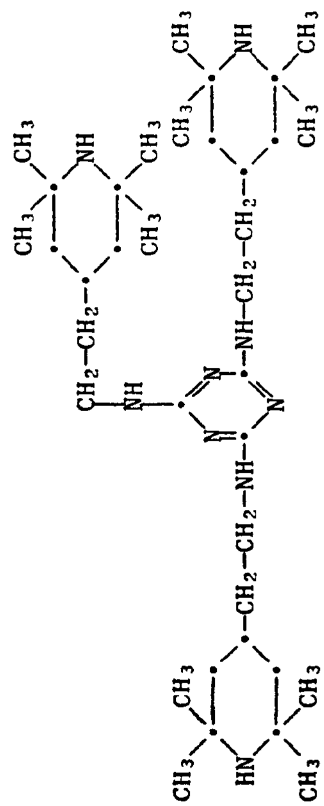

74)

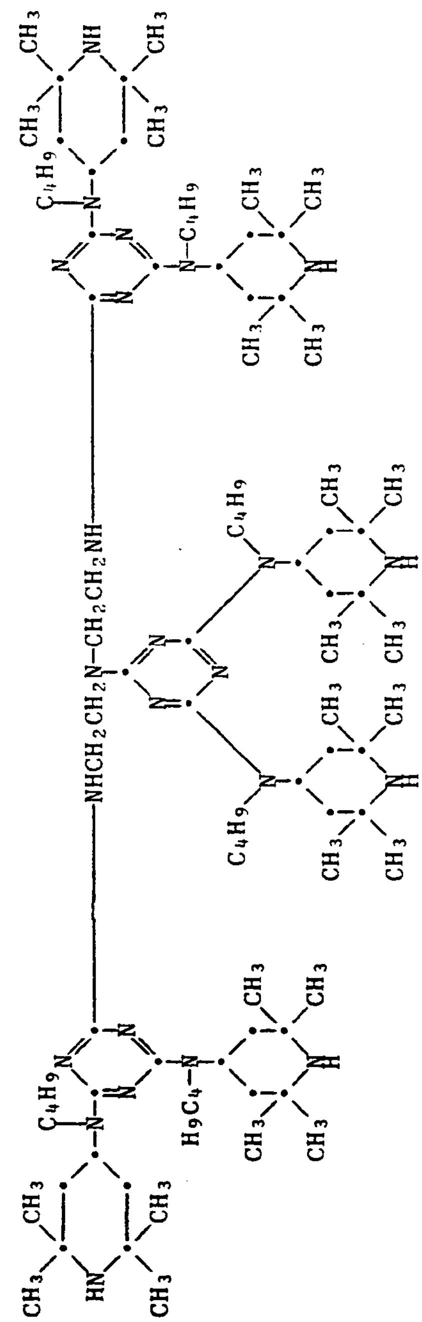

75) 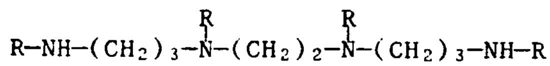

mit R = 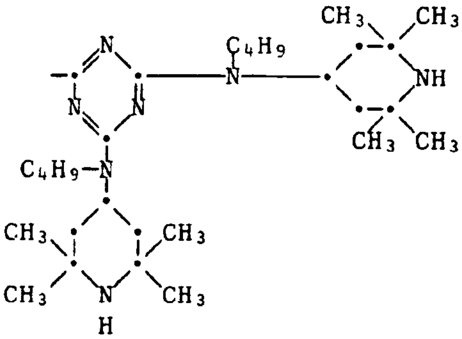

76) 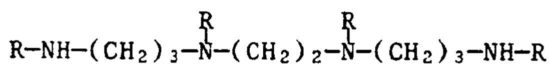

mit R = 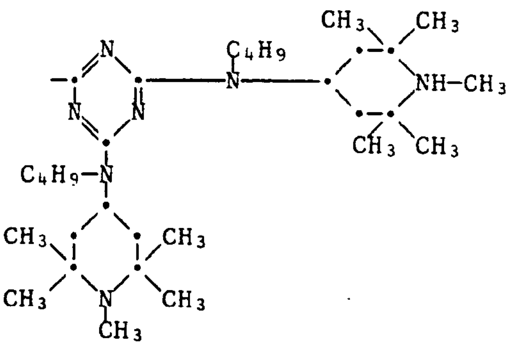

77) 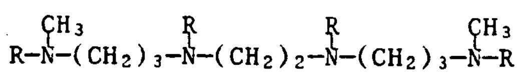

mit R = 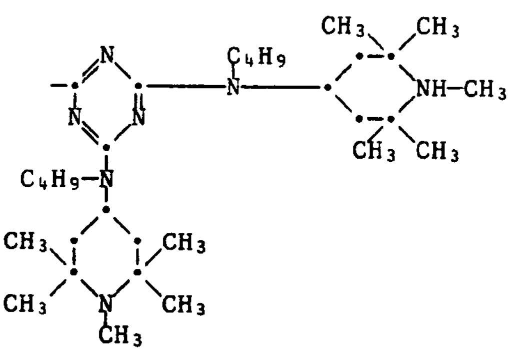

78)

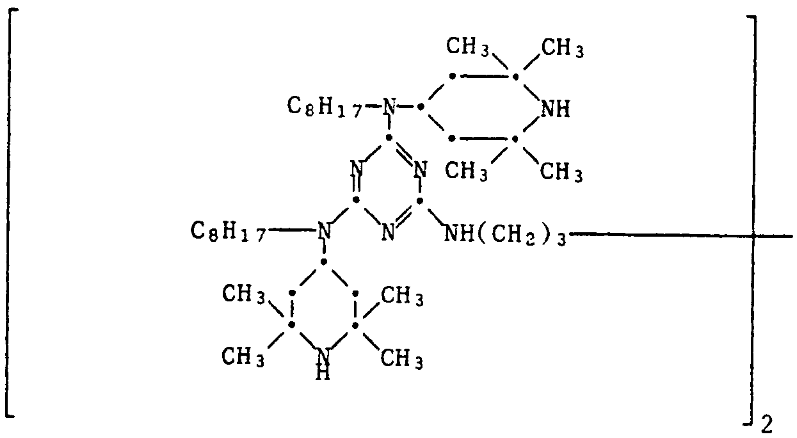

79)

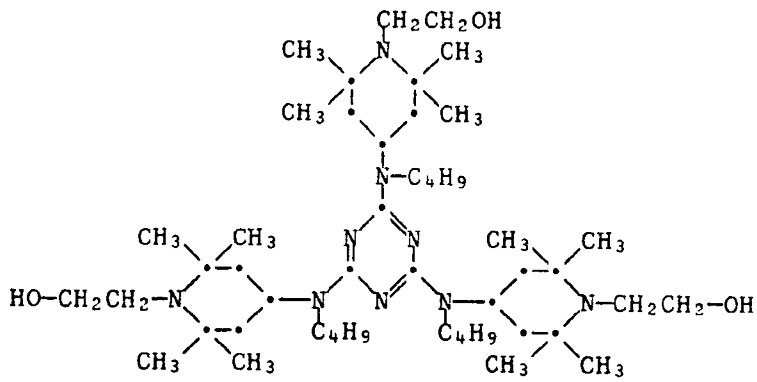

(80)

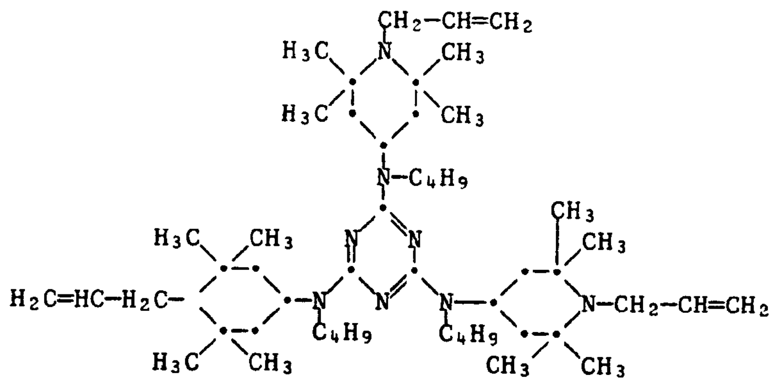

f) Oligomere oder polymere Verbindungen, deren wiederkehrende Struktureinheit einen 2,2,6,6-Tetraalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

81)

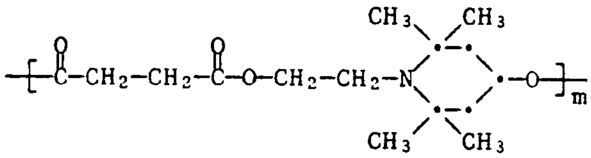

82)

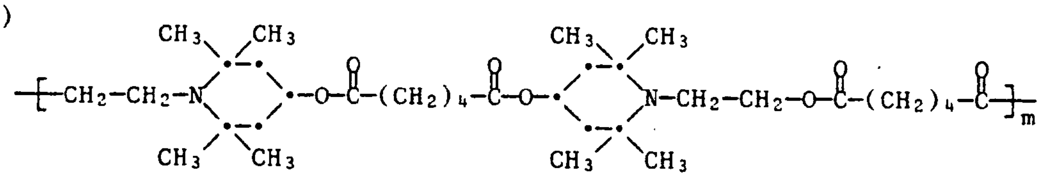

83)

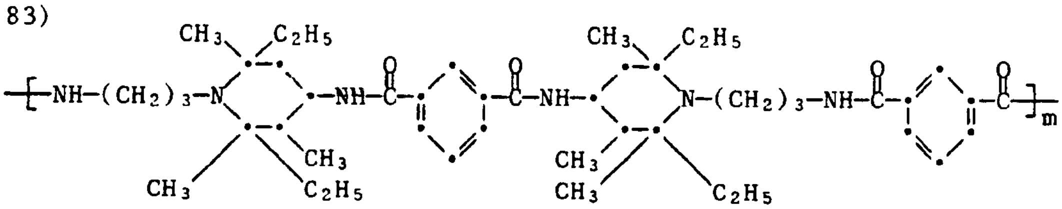

84)

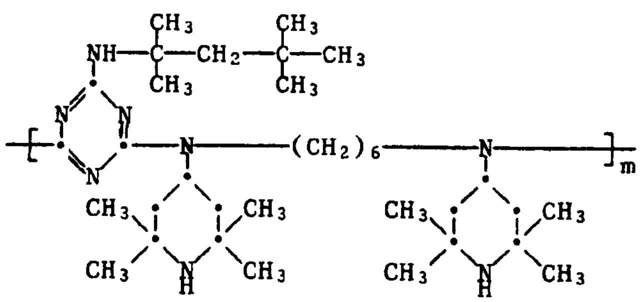

85)

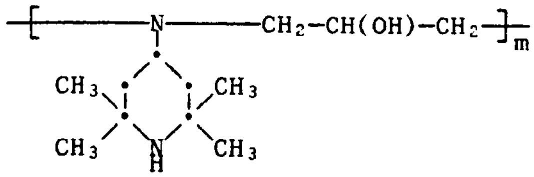

86)

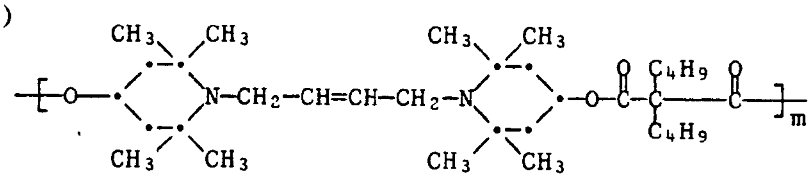

87)

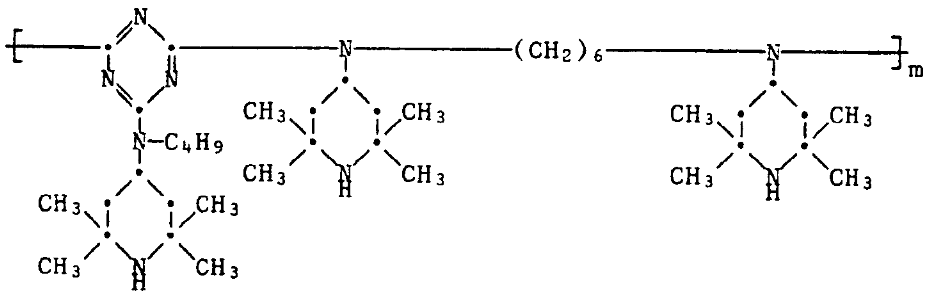

88)

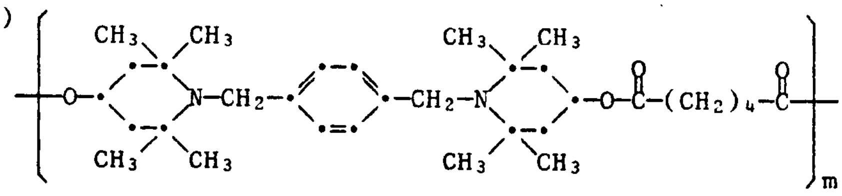

89)

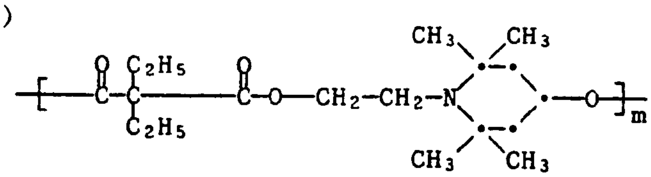

90)

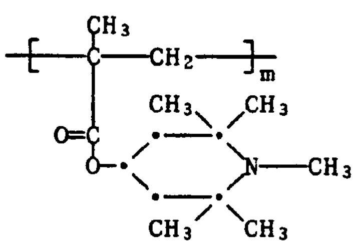

91)

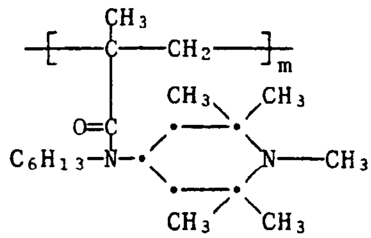

92)

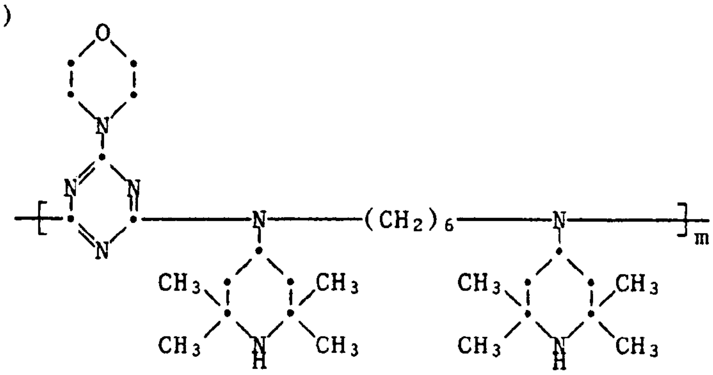

93)

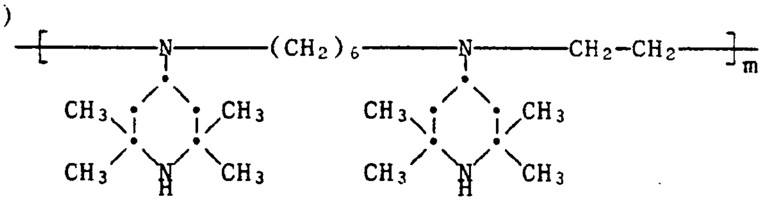

94)

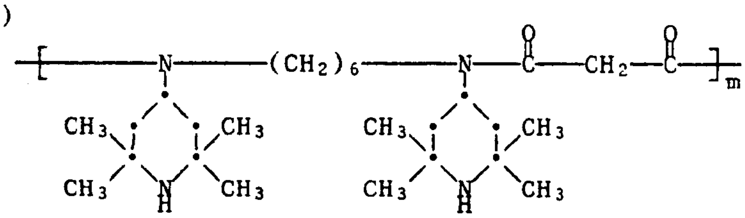

Von diesen Verbindungsklassen sind die Klassen a), d), e) und f) besonders geeignet, insbesondere die Verbindungen Nr. 10, 12, 13, 14, 21, 63, 75, 77, 81, 84, 92 und 93.

Die Menge der zugesetzten Komponente A hängt vom Substrat und der gewünschten Stabilisierung ab. Im allgemeinen setzt man 0,01 bis 5 Gew.-%, bevorzugt 0,025 bis 2 Gew.-%, bezogen auf das Polyolefin, zu.

Die als Komponente B verwendeten Zink- und Magnesiumsalze sind vorzugsweise Verbindungen der Formel $MeL_2$, worin Me Zink oder Magnesium bedeutet und L das Anion einer organischen Säure oder eines Enols ist. Die organische Säure kann z.B. eine Sulfonsäure, Sulfinsäure, Phosphonsäure oder Phosphinsäure sein, ist aber vorzugsweise eine Carbonsäure. Die Säure kann aliphatisch, aromatisch, araliphatisch oder cycloaliphatisch sein, sie kann geradkettig oder verzweigtkettig sein, sie kann durch Hydroxyl- oder Alkoxygruppen substituiert sein, sie kann gesättigt oder ungesättigt sein und sie enthält vorzugsweise bis zu 24 C-Atome.

Beispiele für solche Carbonsäure sind die Ameisen-, Essig-, Propion-, Butter-, Isobutter-, Capron-, 2-Ethylcapron-, Capryl-, Caprin-, Laurin-, Palmitin-, Stearin-, Behen-, Oel-, Milch-, Ricinol-, 2-Ethoxypropion-, Benzoe-, Salicyl-, 4-Butylbenzoe-, Tolyl-, 4-Dodecylbenzoe-, Phenylessig-, Naphthylessig-, Cyclohexancarbon-, 4-Butylcyclohexancarbon- oder Cyclohexylessigsäure. Die Carbonsäure kann auch ein technisches Gemisch von Carbonsäuren sein, wie z.B. technische Fettsäuregemische oder Alkylierungsgemische von Benzoesäuren.

Beispiele für Schwefel oder Phosphor enthaltende organische Säuren sind Methan-, Ethan-, $\alpha,\alpha$-Dimethylethan-, n-Butan-, n-Dodecan-, Benzol-, Toluol-, 4-Nonylbenzol-, 4-Dodecylbenzol- oder Cyclohexan-sulfonsäure, Dodecan-, Benzol- oder Naphthalin-sulfinsäure, Butylphosphonsäure, Phenylphosphonsäure, Phenylphosphonsäuremonomethyl-(oder -monoethyl)-ester, Benzylphosphonsäuremonobutylester, Dibutylphosphinsäure oder Diphenylphosphinsäure.

Wenn L ein Enolat-Anion ist, so handelt es sich vorzugsweise um ein Anion einer β-Dicarbonylverbindung oder eines o-Acylphenols. Beispiele für β-Dicarbonylverbindungen sind Acetylaceton, Benzoylaceton, Dibenzoylmethan, Ethyl-acetoacetat, Butylacetoacetat, Lauryl-acetoacetat oder α-Acetylcyclohexanon. Beispiele für o-Acylphenole sind 2-Acetylphenol, 2-Butyroylphenol, 2-Acetyl-1-naphthol, 2-Benzoylphenol oder Salicylaldehyd. Vorzugsweise ist das Enolat das Anion einer β-Dicarbonylverbindung mit 5-20 C-Atomen.

Bevorzugt werden als Komponente B verwendet: Magnesium-acetat, -laurat und -stearat, Zink- formiat, -acetat, -önanthat, -laurat und -stearat sowie Zink- oder Magnesium-acetylacetonat.

Es können auch Gemische mehrerer Magnesiumsalze oder mehrerer Zinksalze oder Gemische von Zink- und Magnesiumsalzen verwendet werden.

Die Metallsalze der Komponente B werden den Polyolefinen vorzugsweise in einer Menge von 0,005 bis 1 %, insbesondere 0,05 bis 0,5 %, bezogen auf das Polyolefin, zugegeben.

Die UV-Absorber der Komponente C können z.B. solche vom Typ der 2-(2-Hydroxyphenyl)-benztriazole, 2-Hydroxybenzophenone, Oxalsäureanilide, hydroxylierten Arylbenzoate, Hydroxyphenyltriazine oder Zimtsäurederivate sein.

Beispiele für Benztriazol-UV-Absorber sind:

2-(2-Hydroxy-5-methylphenyl)-benztriazol
2-(2-Hydroxy-5-tert.butylphenyl)-benztriazol
2-(2-Hydroxy-3,5-di-tert.butylphenyl)-benztriazol
5-Chlor-2-(2-hydroxy-3-tert.butyl-5-methylphenyl)-benztriazol
5-Chlor-2-(2-hydroxy-3,5- di-tert.butyl-5-methylphenyl)-benztriazol
2(2-Hydroxy-3-tert.phenyl-5-methyl)-benztriazol
2-(2-Hydroxy-3,5-di-tert.amyl)-benztriazol
2-(2-Hydroxy-3-sec.butyl-5-tert.butyl)-benztriazol
2-(2-Hydroxy-4-octyloxy)-benztriazol
2-(2-Hydroxy-5-tert.octyl)-benztriazol
2-[2-Hydroxy-3,5-di(α,α-dimethylbenzyl)phenyl]-benztriazol
5-Chlor-2-[2-hydroxy-3-tert.butyl-5-(2-octyloxycarbonyl)ethylphenyl]-benztriazol

Beispiele für Benzophenon-UV-Absorber sind:

2,4-Dihydroxybenzophenon
2-Hydroxy-4-methoxy-benzophenon
2-Hydroxy-4-octyloxy-benzophenon
2-Hydroxy-4-decyloxy-benzophenon
2-Hydroxy-4-dodecyloxy-benzophenon
2-Hydroxy-4-benzyloxy-benzophenon
2,2′-Dihydroxy-4,4′-dimethoxy-benzophenon
2,2′,4,4′-Tetrahydroxy-benzophenon
2,4-Dihydroxy-4′-tert.butyl-benzophenon

Beispiele für Oxalsäureanilid-UV-Absorber sind:

2-Ethyl-2′-ethoxy-oxalsäureanilid
2-Ethyl-2′-ethoxy-5′-tert.butyl-oxalsäureanilid
4-Dodecyl-2′-ethoxy-oxalsäureanilid
4,4′-Di-octyloxy-oxalsäureanilid
2,2′-Di-octyloxy-5,5′-di-tert.butyl-oxalsäureanilid
2,2′-Di-dodecyloxy-5,5′-di-tert.butyl-oxalsäureanilid

Beispiele für hydroxylierte Arylbenzoate sind:

Phenylsalicylat
Octylphenyl-salicylat
3,5-Di-tert.butyl-4-hydroxybenzoesäureester von 2,4-Di-tert.butylphenol
Resorcin-monobenzoat
Di-(4-tert.butylbenzoyl)-resorcin

Beispiele für Hydroxyphenyltriazine sind:

2,4,6-Tris(2,4-dihydroxyphenyl)-1,3,5-triazin
2,4-Bis(2,4-dihydroxyphenyl)-6-(p-chlorphenyl)-1,3,5-triazin
2,4-Bis(2-hydroxyphenyl)-6-ethyl-1,3,5-triazin

Beispiele für Zimtsäurederivate sind:

α-Cyano-β-phenylzimtsäure-ethylester
α-Carbomethoxyzimtsäure-methylester

α-Cyano-β-methyl-p-methoxyzimtsäure-butylester
α-Cyano-β-phenylzimtsäure-isooctylester

Besonders bevorzugt sind UV-Absorber vom Benztriazol- und Benzophenon-Typ.

Die UV-Absorber werden in den üblichen Konzentrationen verwendet, insbesondere in einer Menge von 0,01 bis 1 Gew.-%, bezogen auf das Polyolefin.

Als Pigment der Komponente $C_2$ kann ein anorganisches oder organisches Pigment verwendet werden. Dies kann ein weisses, schwarzes oder farbiges Pigment sein. Es kann ein einzelnes Pigment oder eine Mischung von Pigmenten sein.

Beispiele für anorganische Pigmente sind Titandioxid, Zinkoxid, Bariumcarbonat, Russ, Cadmiumsulfid und -selenid, Chromate, Chromoxide, Eisenoxide oder Bleioxide.

Beispiele für organische Pigmentklassen sind Azopigmente, Anthrachinone, Phthalocyanine, Pyrrolopyrrole, Chinacridone, Isoindoline oder Perylen-Pigmente.

Die Menge an Pigment kann in weiten Grenzen schwanken, man kann insbesondere 0,01 bis 10 Gew.-%, bezogen auf das Polyolefin, zusetzen.

Die Zusätze A, B und C können einzeln oder als Mischung dem Polyolefin zugesetzt werden. Der Zusatz erfolgt vor oder bei der Formgebung des Polymeren, beispielsweise durch Vermischen mit dem pulverförmigen Polymeren oder durch Zusatz zur Schmelze des Polymeren.

Ausser den erfindungsgemässen Stabilisatoren A, B und C können dem Polymeren auch noch andere Stabilisatoren zugesetzt werden, wie z.B. Antioxidantien vom Phenol-Typ, Metalldesaktivatoren, Phosphite und Phosphonite oder Peroxid-zerstörende Verbindungen vom Typ organischer Thioverbindungen.

Beispiele hierfür sind:

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butyphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinin, 2,5-Di-tert.amyl-hydrochinon, 2,6-Diphenyl-4-octadecyloxyphenol.

1.3. Hydroxylierte Thiodiphenylether, z.B. 2,2′-Thio-bis-(6-tert.butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

1.4. Alkyliden-Bisphenole, z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert.butylphenol), 2,2′-Ethyliden-bis-(4,6-di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert.butylphenol), 4,4′-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.butyl-4′-hydroxyphenyl)-butyrat], Bis-(3-tert.butyl-4-hydroxy-5-methylphenyl)-dicyclopentadien, Bis-[2-(3′-tert.butyl-2′-hydroxy-5′-methyl-benzyl)-6-tert.butyl-4-methylphenyl]-terephthalat.

1.5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxy-stearinsäureanilid, 2,4-Bis-(octylmercapto)-6-(3,5-di-tert.-butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-Bis-(hydroxyethyl)-oxalsäurediamid.

1.8. Ester der β-(5-tert.butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol,

Triethylenglycol, Pentaerythrit, Tris-(hydroxy)-ethyl-isocyanurat, N,N′-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

2. Metalldesaktivatoren, wie z.B. N,N′-Diphenyloxalsäurediamid, N-Salicylal-N′-salicycloylhydrazin, N,N′-Bis-(salicyloyl)-hydrazin, N,N′-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

3. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4′-biphenylen-diphosphonit, 3,9-Bis-(2,4-di-tert.butylphenoxy)-2,4,8,10-tetraoxa-3,9-diphosphaspiro[5.5]undecan.

4. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

Von besonderer Bedeutung ist hiervon der Zusatz von Antioxidantien des Phenol-Typs.

Ausserdem können noch andere Additive zugesetzt werden, wie sie für Polyolefine üblich sind, z.B. Füllstoffe, Gleitmittel, Flammschutzmittel oder Antistatika.

Die so stabilisierten Polyolefine können in verschiedenster Form angewendet werden, z.B. als Folien, Fasern, Bändchen, Platten, Flaschen, Rohren oder sonstigen Profilen.

Das folgende Beispiel illustriert die Erfindung näher. Darin bedeuten Teile Gewichtsteile und % Gewichts-% sofern nicht anders angegeben.

Beispiel 1: Stabilisierung von Polypropylen-Spritzgussplättchen

100 Teile Polypropylenpulver [Schmelzindex 2,4 g/10 min (230°C/2160 g)] werden in einem Trommelmischer mit 0,05 Teilen Pentaerythrityl-tetrakis-[β-(3,5-di-tert.butyl-4-hydroxyiphenyl)-propionat], 0,05 Teilen Tris-(2,4-di-tert.butylphenyl)-phosphit, 0,1 Teilen Ca-Stearat und den in den Tabellen 1 und 2 angegebenen Zusätzen gemischt und anschliessend in einem Extruder bei einer Temperatur von 200 bis 220°C granuliert.

Das erhaltene Granulat wird in einem Spritzgussautomaten, bei einer Temperatur von 250°C und einer Formtemperatur von 60°C zu 2 mm dicken Plättchen gespritzt.

Die so hergestellten Polypropylenplättchen werden in Florida bewittert. In regelmässigen Zeitabständen wird die Schlagzähigkeit der Proben gemessen. Als Mass für die Schutzwirkung der Stabilisierungssysteme gilt die Belichtungsenergie (in Kilolangleys, Klys, wobei 1 Langley 4, 1868 j/$cm^2$ entspricht) bis zu 50 % Restschlagzähigkeit.

Folgende Lichtschutzmittel werden verwendet

LS-1 Polyester der Formel

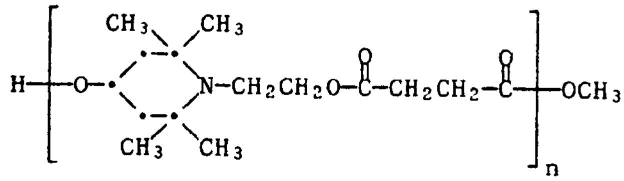

UV-1 Benztriazol-UV-Absorber der Formel

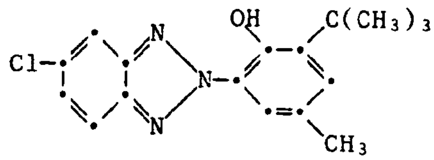

UV-2 Benzophenon-UV-Absorber der Formel

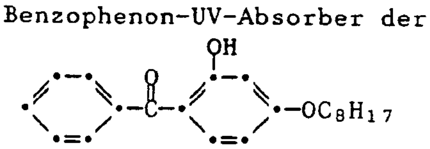

Tabelle 1 zeigt die Wirkung von Magnesium-stearat, Tabelle 2 von Zink-stearat als Komponente B. Die Mengenangaben in % beziehen sich auf das Polypropylen.

Tabelle 1

| Lichtschutzmittel | Mg-stearat | Pigment | Klys Florida bis 50 % Schlagzähigkeit |
|---|---|---|---|
| 0,05 % LS-1 | - | - | 36 |
| 0,05 % LS-1 | 0,1 % | - | 73 |
| 0,05 % LS-1 + 0,05 % UV-1 | - | - | 102 |
| 0,05 % LS-1 + 0,05 % UV-1 | 0,1 % | - | ~195 |
| 0,05 % LS-1 + 0,05 % UV-2 | - | - | 91 |
| 0,05 % LS-1 + 0,05 % UV-2 | 0,1 % | - | ~220 |
| 0,05 % LS-1 | - | 0,5 % $TiO_2$ | 76 |
| 0,05 % LS-1 | 0,1 % | 0,5 % $TiO_2$ | 164 |

Tabelle 2

| Lichtschutzmittel | Zn-stearat | Pigment | Klys Florida bis 50 % Schlagzähigkeit |
|---|---|---|---|
| 0,05 % LS-1 | - | - | 36 |
| 0,05 % LS-1 | 0,1 % | - | 68 |
| 0,05 % LS-1 + 0,05 % UV-1 | - | - | 102 |
| 0,05 % LS-1 + 0,05 % UV-1 | 0,1 % | - | ~190 |
| 0,05 % LS-1 + 0,05 % UV-2 | - | - | 91 |
| 0,05 % LS-1 + 0,05 % UV-2 | 0,1 % | - | ~170 |
| 0,05 % LS-1 | - | 0,5 % $TiO_2$ | 76 |
| 0,05 % LS-1 | 0,1 % | 0,5 % $TiO_2$ | ~160 |

**Patentansprüche**

1. Gegen Lichtschädigung stabilisiertes Polyolefin, enthaltend
A) mindestens ein Polyalkylpiperidin-Lichtschutzmittel,
B) ein organisches Zink- oder Magnesiumsalz und
C) entweder
$C_1$) einen UV-Absorber oder
$C_2$) ein Pigment oder
$C_3$) einen UV-Absorber und ein Pigment.

2. Stabilisiertes Polypropylen gemäss Anspruch 1.

3. Stabilisiertes Polyolefin gemäss Anspruch 1, enthaltend als Komponente A ein Lichtschutzmittel, das in seinem Molekül mindestens eine Gruppe der Formel I enthält,

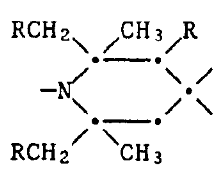

(I)

worin R Wasserstoff oder Methyl ist.

4. Stabilisiertes Polyolefin gemäss Anspruch 3, worin in Formel I R Wasserstoff ist.

5. Stabilisiertes Polyolefin gemäss Anspruch 1, worin die Komponente B ein Salz der Formel $MeL_2$ ist, worin Me Zink oder Magnesium bedeutet und L das Anion einer organischen Säure oder eines Enols bedeutet.

6. Stabilisiertes Polyolefin gemäss Anspruch 5, worin L das Anion einer organischen Carbonsäure mit bis zu 24 C-Atomen ist.

7. Stabilisiertes Polyolefin gemäss Anspruch 5, worin L das Enolat-Anion einer β-Dicarbonylverbindung mit 5-20-C-Atomen ist.

8. Stabilisiertes Polyolefin gemäss Anspruch 5, worin L das Anion von Essigsäure, Oenanthsäure, Laurinsäure, Stearinsäure oder Acetylaceton ist.

9. Stabilisiertes Polyolefin gemäss Anspruch 1, worin die Komponente C ein UV-Absorber vom Typ der 2-(2-Hydroxyphenyl)-benztriazole oder der 2-Hydroxybenzophenone ist.

10. Stabilisiertes Polyolefin gemäss Anspruch 1, worin die Komponente C ein Pigment ist.

11. Stabilisiertes Polyolefin gemäss Anspruch 10, worin die Komponente C ein $TiO_2$-Pigment ist.

12. Stabilisiertes Polyolefin gemäss Anspruch 1, enthaltend 0,01-5 Gew.-% der Komponente A, 0,005-1 Gew.-% der Komponente B und 0,01-1 Gew.-% der Komponente $C_1$ oder 0,01-10 Gew.-% der Komponente $C_2$, jeweils bezogen auf das Polyolefin.

13. Verfahren zum Stabilisieren von Polyolefinen gegen Lichtschädigung durch Zusatz eines Stabilisator-Gemisches, dadurch gekennzeichnet, dass das Gemisch aus

A) mindestens einem Polyalkylpiperidin-Lichtschutzmittel,

B) einem organischen Zink- oder Magnesiumsalz und

C) entweder

$C_1$) einem UV-Absorber oder

$C_2$) einem Pigment oder

$C_3$) einem UV-Absorber und einem Pigment besteht.

## Claims

1. A polyolefin stabilized against damage caused by light and containing

A) at least one polyalkylpiperidine light stabilizer,

B) an organic salt of zinc or magnesium and

C) either

$C_1$) a UV absorber or

$C_2$) a pigment or

$C_3$) a UV absorber and a pigment.

2. Stabilized polypropylene according to claim 1.

3. A stabilized polyolefin according to claim 1, containing, as the component A, a light stabilizer the molecule of which contains at least one group of the formula I

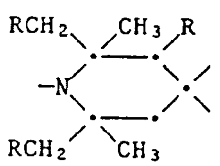

(I)

in which R is hydrogen or methyl.

4. A stabilized polyolefin according to claim 3, in which R in formula I is hydrogen.

5. A stabilized polyolefin according to claim 1, in which the component B is a salt of the formula $MeL_2$ in which Me is zinc or magnesium and L is the anion of an organic acid or of an enol.

6. A stabilized polyolefin according to claim 5, in which L is the anion of an organic carboxylic acid having up to 24 C atoms.

7. A stabilized polyolefin according to claim 5, in which L is the enolate anion of a β-dicarbonyl compound having 5-20 C atoms.

8. A stabilized polyolefin according to claim 5, in which L is the anion of acetic acid, oenanthic acid, lauric acid, stearic acid or acetylacetone.

9. A stabilized polyolefin according to claim 1, in which the component C is a UV absorber of the 2-(2-hydroxyphenyl)benzotriazole or 2-hydroxybenzophenone type.

10. A stabilized polyolefin according to claim 1, in which the component C is a pigment.

11. A stabilized polyolefin according to claim 10, in which the component C is a $TiO_2$ pigment.

12. A stabilized polyolefin according to claim 1, containing 0.01-5% by weight of the component a, 0.005-1% by weight of the component B and 0.01-1% by weight of the component $C_1$ or 0.01-10% by weight of the component $C_2$, in each case relative to the polyolefin.

13. A process for stabilizing polyolefins against damage caused by light by adding a mixture of stabilizers wherein the mixture consists of

A) at least one polyalkylpiperidine light stabilizer,

B) an organic salt of zinc or magnesium and

C) either
$C_1$) a UV absorber or
$C_2$) a pigment or
$C_3$) a UV absorber and a pigment.

## Revendications

1. Polyoléfine stabilisée contre la dégradation par la lumière, polyoléfine qui contient :
A) au moins un stabilisant à la lumière polyalkylpipéridinique,
B) un sel organique de zinc ou de magnésium et
C) soit :
$C_1$) un absorbeur de rayons ultraviolets, soit
$C_2$) un pigment, soit
$C_3$) un absorbeur de rayons ultraviolets et un pigment.

2. Polypropylène stabilisé selon la revendication 1.

3. Polyoléfine stabilisée selon la revendication 1, qui contient comme composante A un stabilisant à la lumière dont la molécule renferme au moins un radical répondant à la formule I :

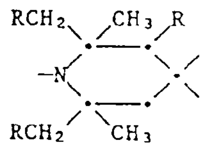

(I)

dans laquelle R représente l'hydrogène ou un méthyle.

4. Polyoléfine stabilisée selon la revendication 3, dans laquelle le symbole R contenu dans la formule 1 représente l'hydrogène.

5. Polyoléfine stabilisée selon la revendication 1, dont la composante B est un sel répondant à la formule $MeL_2$ dans laquelle Me représente le zinc ou le magnésium et L l'anion d'un acide organique ou d'un énol.

6. Polyoléfine stabilisée selon la revendication 5, dans laquelle L représente l'anion d'un acide carboxylique organique contenant au plus 24 atomes de carbone.

7. Polyoléfine stabilisée selon la revendication 5, dans laquelle L représente l'anion énolate d'un composé β-dicarbonylique contenant de 5 à 20 atomes de carbone.

8. Polyoléfine stabilisée selon la revendication 5, dans laquelle L représente l'anion de l'acide acétique, de l'acide oenanthique, de l'acide laurique, de l'acide stéarique ou de l'acétylacétone.

9. Polyoléfine stabilisée selon la revendication 1, dont la composante C est un absorbeur de rayons ultraviolets du type des 2-(2-hydroxy-phényl)-benzotriazoles ou des 2-hydroxy-benzophénones.

10. Polyoléfine stabilisée selon la revendication 1, dont la composante C est un pigment.

11. Polyoléfine stabilisée selon la revendication 10, dont la composante C est un pigment de $TiO_2$.

12. Polyoléfine stabilisée selon la revendication 1, qui contient de 0,01 à 5 % en poids de la composante A, de 0,005 à 1 % en poids de la composante B et de 0,01 à 1 % en poids de la composante $C_1$ ou de 0,01 à 10 % en poids de la composante $C_2$, à chaque fois par rapport à la polyoléfine.

13. Procédé pour stabiliser des polyoléfines contre la dégradation due à la lumière, par addition d'un mélange stabilisant, procédé caractérisé en ce que le mélange est constitué :
A) d'au moins un stabilisant à la lumière polyalkylpipéridinique,
B) d'un sel organique de zinc ou de magnésium et
C) soit :
$C_1$) d'un absorbeur de rayons ultraviolets, soit
$C_2$) d'un pigment, soit
$C_3$) d'un absorbeur de rayons ultraviolets et d'un pigment.